# EUROPÄISCHE PATENTSCHRIFT

(11) **EP 0 643 280 B1**
(45) Veröffentlichungstag und Bekanntmachung des Hinweises auf die Patenterteilung: **01.10.1997**
(21) Anmeldenummer: 94113009.8
(22) Anmeldetag: 20.08.1994
(51) Int. Cl.: G01B 7/012, G01B 21/04

(54) **Koordinatenmessgerät mit einem Tastkopf und einer Elektronik zur Verarbeitung des Tastsignals**
Coordinate measuring machine having a probe-head and electronic circuit for processing the touch signals
Dispositif de mesure de coordonnées, avec sonde tactile et circuit électronique de traitement des signaux de contact

(30) Priorität: 13.09.1993 DE 4330873
(43) Veröffentlichungstag der Anmeldung: 15.03.1995
(73) Patentinhaber: Carl Zeiss, D-89518 Heidenheim (Brenz) (DE); CARL-ZEISS-STIFTUNG, HANDELND ALS CARL ZEISS, D-89518 Heidenheim (Brenz) (DE)
(72) Erfinder: Fuchs, Anton, D-89558 Böhmenkirchen (DE); Aubele, Eugen, D-89558 Böhmenkirchen (DE); Kern, Rudi, D-73430 Aalen (DE); Rögele, Rudolf, D-89551 Königsbronn (DE); Puntigam, Walter, D-89520 Grosskuchen (DE); Aubele, Karl-Eugen, D-73312 Geislingen (DE)

(56) Entgegenhaltungen:
- EP-A- 0 388 993
- EP-A- 0 501 680
- EP-A- 0 556 574
- WO-A-87/01798
- GB-A- 2 172 707
- US-A- 4 677 755
- QUALITY EUROPE, Nr.1, 1991, MUNICH DE Seiten 26 - 30 A.MODJARRAD ; P.HAJDUKIEWICZ 'Development of a small novel 3-dimensional high accuracy probe for CMMs'
- AUTOMATED INSPECTION AND PRODUCT CONTROL. PROCEEDINGS OF THE 8TH INTERNATIONAL CONFERENCE: AIPC 8, CHICAGO, IL, USA, 23-25 JUNE 1987, ISBN 0-948507-54-3, UK, PAGE(S) 225 - 240 JARMAN T 'Multiwire-probing for the versatile CMM (automated inspection)'

## Beschreibung

Die Erfindung betrifft ein Koordinatenmeßgerät mit einem Tastkopf, dem auswechselbare Taster und eine Elektronik zur Verarbeitung der beim Tastvorgang erzeugten Signale zugeordnet sind, die das Einstellen von Parametern erlaubt, welche die Art und Weise der Signalverarbeitung bestimmen.

Ein solches Koordinatenmeßgerät wird von der Anmelderin unter der Bezeichnung MC vertrieben. Dieses Koordinatenmeßgerät besitzt einen sogenannten schaltenden Tastkopf, der beim Antastvorgang zwei Signale erzeugt, ein erstes sogenanntes Piezosignal, das von den im Taststift angeordneten piezoelektrischen Sensoren bei Berührung mit dem Werkstück erzeugt wird. Im Zuge der Auslenkbewegung während des Antastvorganges wird noch ein zweites, sogenanntes Kontaktsignal erzeugt, nämlich dann, wenn der nachgiebig gelagerte Taststiftträger aus seiner Ruhelage ausgelenkt wird und der Kontakt des in die Lagerung des Taststiftträgers integrierten elektromechanischen Schalters öffnet.

Die Signale dieses schaltenden Tastkopfes wurden bisher weitgehend nach einem festen Schema ausgewertet. Es gibt nur eine begrenzte Möglichkeit, sich mit der Auswertung an veränderte Umgebungsbedingungen anzupassen. Beispielsweise kann der Bediener durch Drehen einer Schraube am Gehäuse des Tastkopfes die Empfindlichkeit des Verstärkers für das Piezosignal einstellen. Bei automatischen CNC-Abläufen ist dadurch aber die Empfindlichkeit der Auswertung festgelegt, obwohl sie nicht für alle während des Meßablaufs eingewechselten Tasterkonfigurationen oder Meßaufgaben optimal ist. Zur Anpassung an unterschiedliche Einsatzgebiete des Koordinatenmeßgeräts, beispielsweise für den Einsatz in der Fertigung unter rauhen Umgebungsbedingungen, sind spezielle Leiterkarten vorgesehen, die auf diesen Einsatz optimal abgestimmte Filter für das Tastsignal enthalten waren. Werden neue Geräte entwickelt, so muß auch die Bestückung der Auswerteelektronik angepaßt werden. Damit steigen die Lagerhaltungskosten mit jeder neuen Gerätevariante.

Darüber hinaus gibt es trotz dieser Maßnahmen Fälle bzw. Meßaufgaben, bei denen die Tastkopfelektronik kein eindeutiges d.h. gültiges Tastsignal liefert, beispielsweise dann, wenn mit relativ geringer Antastgeschwindigkeit weiche Werkstücke angetastet werden sollen.

In der internationalen Patentanmeldung Veröffentlichungsnummer WO 87/01798 ist ein Koordinatenmeßgerät mit auswechselbaren Tastköpfen verschiedenen Typs beschrieben. Dort werden die Tastköpfe von einer Elektronik, die den Code des Tastertyps erkennt, an das ihnen zugeordnete Interface angeschlossen, d.h. es sind mehrere Interfaces vorgesehen, zwischen denen umgeschaltet wird. Die Interfaces enthalten die Elektronik zur Weiterverarbeitung der Tastkopfsignale. Hierbei wird jedoch zwischen vollständigen, verdrahteten Interfaces umgeschaltet, eine Anpassung der Tastsignalverarbeitung des gleichen jeweils eingewechselten Tastkopfes an unterschiedliche Meßaufgaben oder Umgebungsbedingungen ist nicht offenbart.

In der EP 0 501 680 ist eine Elektronik zur Verarbeitung der Signale eines Tastkopfes beschrieben, die einen Schaltkreis besitzt, der den Innenwiderstand des mechanischen Kontakts überwacht, dessen öffnen das Tastsignal erzeugt. Die Schaltung paßt den durch Alterung oder Abnutzung größer werdenden Kontaktwiderstand selbsttätig an die festeingestellte Triggerschwelle für das Signal an. Eine von außen gesteuerte Einstellung der Triggerstelle zusammen mit anderen Parametern ist jedoch nicht offenbart.

In der EP 0 388 993 ist eine Elektronik beschrieben, die selbsttätig das Einwechseln von Tastköpfen unterschiedlichen Typs erkennt. Diese Schaltung setzt die Fensterkomperatoren bzw. deren Triggerschwelle für das Tastsignal bei hohen Verfahrgeschwindigkeiten herauf, wodurch die Schaltung unempfindlicher wird. Auch in dieser Veröffentlichung ist eine umschaltbar von außen gesteuerte Einstellung zusammen mit anderen Parametern nicht offenbart.

Der vorliegenden Erfindung liegt nun die Aufgabe zugrunde, bei einem Koordinatenmeßgerät des eingangs genannten Typs die Elektronik zur Verarbeitung der Tastkopfsignale so auszubilden, daß sie mit möglichst einfachen Mitteln jederzeit optimal an die betreffende Meßaufgabe angepaßt ist. Diese Aufgabe wird mit den im Anspruch 1 angegebenen Maßnahmen gelöst.

Die erfindungsgemäße Lösung hat mehrere Vorteile: Da die für die gewünschte Meßaufgabe optimale Parameterkombination abgespeichert ist und die Parameter bzw. die Bauteile in der Elektronik digital einstellbar sind, können sie einfach und schnell eingestellt werden. Das wirkt sich besonders vorteilhaft bei automatischen Meßabläufen aus. Beispielsweise kann dann, wenn die Parameterdateien ausgewählten Taststiften, Tasterkonfigurationen oder für den Fall, daß ganze Tastköpfe ausgewechselt werden, die Dateien den jeweiligen Tastköpfen zugeordnet sind, beim Einwechseln vom Rechner des Koordinatenmeßgerätes automatisch der für dieses Meßmittel optimale Parametersatz geladen und in der Elektronik eingestellt werden. Die Zuordnung der Dateien zum betreffenden z.B. Taststift erfolgt beispielsweise dadurch, daß der Bediener beim Kalibriervorgang des Taststiftes auf dem Rechner die passende Datei auswählt und mit der Taststiftadresse verknüpft.

Das System ist außerdem sehr nutzerfreundlich, denn vom Bediener müssen nicht eine Vielzahl verschiedener Parameter einzeln eingestellt werden, sondern er kann mit wenigen beispielsweise werkseitig für bestimmte Meßaufgaben oder Taster vordefinierten Dateien arbeiten, in denen die optimale Wertekombination der Parameter bereits zusammengestellt ist. So können beispielsweise auch verschiedene Dateien vorgesehen werden einmal für das möglichst genaue Messen bei relativ niedrigen Verfahr- und Antastgeschwindigkeiten und zum anderen für das weniger genaue Messen bei hohen Verfahr- und Antastgeschwindigkeiten. Für beide Fälle ergeben sich unterschiedliche Signalformen des Antastsignals und sind jeweils andere Parameter der Signalauswertung optimal bzw. wird das Antastsignal in einer anderen Betriebsart ausgewertet.

Vollautomatisch kann die Einstellung der Parameter bezogen auf die verwendete Tasterkonfiguration oder den Typ des verwendeten Tastkopfs dann erfolgen, wenn beispielsweise der einzuwechselnden Tasterkonfiguration oder dem Tastkopf (Sensor) ein identifizierbarer Code zugeordnet ist. Die Auswahl oder Vorauswahl der richtigen Parameterdateien und gegebenenfalls die nachfolgende Einstellung der gespeicherten Werte in der Elektronik kann dann durch den Code gesteuert erfolgen.

Weiterhin ist es möglich, die Auswahl der geeignetsten Parameterdateien und gegebenenfalls das Einstellen einzelner Parameter werkstückbezogen über einen Probelauf zu automatisieren, indem die Signale des Tastkopfs während des Probelaufs aufgezeichnet und von einem geeigneten Programmodul oder Firmwaremodul des betr. und Prozessors ausgewertet werden. Dies kann z.B. in der Weise erfolgen, daß das Programm- oder Firmwaremodul die Signalverläufe nach Frequenz, Amplitude, zeitliche Abfolge etc. analysiert und dem Bediener die geeignetste Parameterkombination vorschlägt oder selbsttätig einstellt. Eine andere Möglichkeit besteht darin, das Modul so zu programmieren, daß die Werkstückoberfläche mehrfach bei verschiedenen Parametereinstellungen angetastet wird und dann die Einstellung ausgewählt wird, die die besten Ergebnisse liefert. In beiden Fällen wird automatisch die Parameterkombination ausgewählt, die bezogen auf die jeweilige Meßaufgabe optimal ist, wobei das Messen eines bestimmten Werkstücktyps Teil der Meßaufgabe ist.

Da außerdem nicht allein die Empfindlichkeit der Einstellung des Tastsignals beispielsweise über die Schwellen von Triggerschaltungen verändert wird, sondern eine ganze Reihe weiterer Parameter wie z.B. die Charakteristik von Frequenzfiltern oder die zulässigen Signaldauern bzw. Zeitabstände einzelner Tastsignalimpulse verändert werden können, läßt sich auch unter schlechten Umgebungsbedingungen und für ausgefallene Meßaufgaben zuverlässig das Tastsignal generieren.

Weitere Vorteile der Erfindung ergeben sich aus der nachfolgenden Beschreibung eines Ausführungsbeispiels anhand der Figuren 1-6 der beigefügten Zeichnungen. Hierbei ist
- Figur 1: eine Prinzipsskizze, die die wesentlichsten Komponenten des Tastsystems und der daran angeschlossenen Elektronik eines Koordinatenmeßgeräts zeigt;
- Figur 2: ist ein Blockschaltbild der die Tastsignale verarbeitenden Elektronik (20) in Figur 1;
- Figur 3: ist eine Skizze, die die Signalverläufe im Logikteil (40) der Elektronik nach Figur 2 veranschaulicht;
- Figur 4: ist eine Liste der verschiedenen in der Elektronik (20) einstellbaren Parameter;
- Figur 5: zeigt verschiedene einwechselbare Taststifte bzw. Tasterkonfigurationen, denen jeweils unterschiedliche Parameterdateien zugeordnet sind;
- Figur 6: ist eine Liste der unterschiedlichen Parameterdateien.

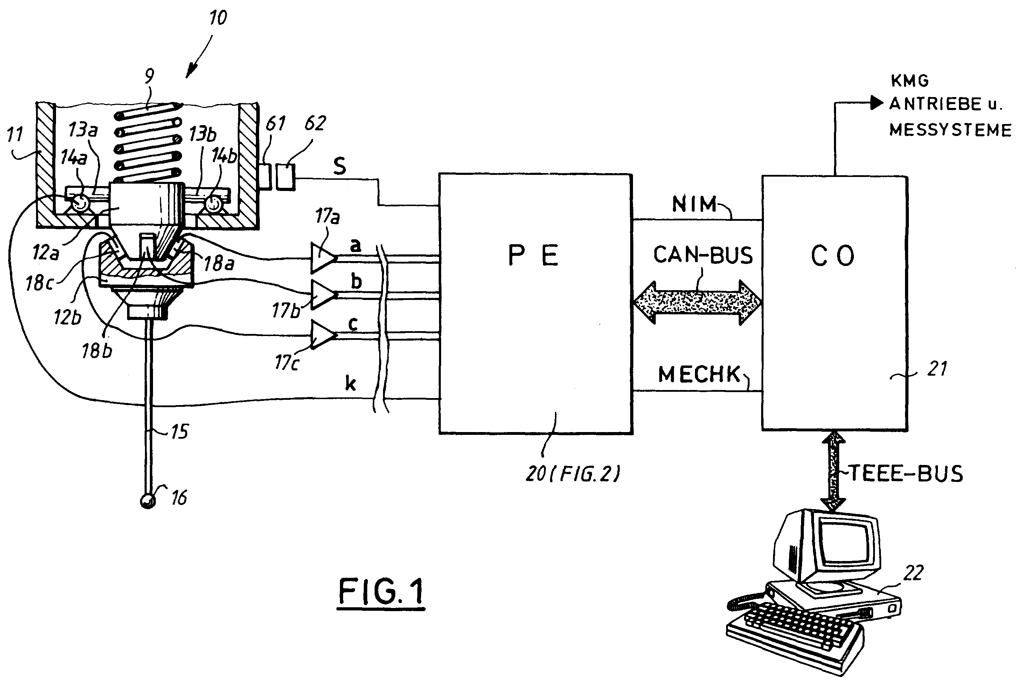

In der in Figur 1 dargestellten Prinzipsskizze ist mit (10) der Tastkopf des Koordinatenmeßgerätes bezeichnet. Er besitzt ein zylindrisches Gehäuse (11), in dem der bewegliche Träger (12a/12b) für den Taststift (15) über drei um 120° versetzter Zylinderstifte (13a, 13b und 13c) auf Kugelpaaren (14a, 14b und 14c) im Gehäuse (11) aufliegt. In der Zeichnung sind nur jeweils zwei der Zylinderstifte (13a, b) und Kugelpaare (14a, b) zu sehen. Eine Feder (9) drückt den beweglichen Träger (12a, b) in das von den Kugelpaaren (14a, 14b und 14c) gebildete 3-Punkt-Lager, von dem er im Zuge des Antastvorgangs, wenn die am Taststift (15) befestigte Tastkugel das zu vermessende Werkstück berührt, an mindestens einer Stelle abhebt. Die Kugelpaare (14a - c) sind an einen elektrischen Stromkreis angeschlossen und bilden mit den Zylinderstiften (13a - c) einen elektrischen Schalter, der beim Antasten geöffnet wird.

Der nachgiebige bzw. bewegliche Taststiftträger ist zweigeteilt und zwischen den zwei Teilen (12a) und (12b) sind ebenfalls um 120° gegeneinander versetzt drei piezoelektrische Sensoren (18a, b und c) angeordnet, die bei der kleinsten Berührung der Tastkugel (16) ein elektrisches Signal erzeugen. Der insoweit beschriebene Tastkopf ist an sich bekannt und wird von der Anmelderin unter der Bezeichnung "schaltender Tastkopf" (ST) an ihren Koordinatenmeßgeräten verkauft.

Die Signalleitung des aus den Zylinderstiften (13) und Kugelpaaren (14) gebildeten elektromagnetischen Schalters sind mit der Signalleitung k an die Tastkopfelektronik (20) angeschlossen, die sich auf einem der verschieblichen Meßschlitten des hier nicht näher dargestellten Koordinatenmeßgerätes befindet. An diese Tastkopfelektronik ist weiterhin über eine Signalleitung S ein Code-Leser (62) angeschlossen, der den Typ des am Koordinatenmeßgerät benutzten Tastkopfes bzw. Sensors anhand des entsprechenden dem Tastkopf (10) zugeordneten Codes im Code-Geber (61) erkennt.

Die Signale der drei empfindlichen piezoelektrischen Sensoren (18a - 18c) sind mit Hilfe entsprechender Leitungen drei Treiberstufen (17a, 17b und 17c) zugeführt. Diese Treiberstufen befinden sich noch im Tastkopfgehäuse. Deren Ausgänge geben erdfreie Gegentaktsignale ab, die über Signalleitungspaare a, b und c für eine differenzielle Meßwertübertragung ebenfalls an die Tastkopfelektronik (20) angeschlossen sind.

Die Tastkopfelektronik (20) ist ihrerseits z.B. über einen sogenannten CAN-Bus, das ist ein schneller bidirektionaler, serieller Zweidrahtbus, mit der Steuerung (21) des Koordinatenmeßgerätes verbunden. Über diesen Bus können die beiden Mikroprozessoren in der Tastkopfelektronik (20) und der Steuerung (21) in beiden Richtungen miteinander komunizieren. Die Steuerung (21) erhält außerdem die Meßsignale von den Linearmeßsystemen der Meßschlitten des Koordinatenmeßgerät und steuert dessen Antriebe. Auf diesen Teil der Elektronik wird nicht bzw. nur insoweit eingegangen, als eine Verbindung zu den von der Tastkopfelektronik (20) verarbeiteten bzw. gelieferten Tastsignalen besteht. Das sind die zwei mit NIM und MECHK bezeichneten Signalleitungen. Das in noch näher zu beschreibender Weise primär von den piezoelektrischen Sensoren (14) abgeleitete, auf der Signalleitung NIM an die Steuerung (21) gegebene Signal stellt das eigentliche Antastsignal dar und dient zum Festhalten der Zählerstände der Linearmeßsysteme. Hingegen dient das auf der Signalleitung MECHK an die Steuerung (21) gegebene in noch näher zu beschreibender Weise aus dem Öffnen des Schaltkontakts (13/14) gewonnene Signal dazu, die Gültigkeit des Antastvorgangs zu bestätigen bzw. das Auslenken des Tastsitfts am Werkstück oder einer Kollision zu melden und die Antriebe des Koordinatenmeßgeräts stillzusetzen bzw. umzusteuern und den Tastkopf wieder frei zu fahren.

Die Steuerung (21) ist mit dem Rechner (22) des Koordinatenmeßgerätes z.B. über einen langsameren parallelen, sogenannten IEEE-Bus verbunden. Über diesen Bus empfängt die Steuerung die für den Meßablauf erforderlichen Daten vom Rechner und gibt an diesen u. a. die von den Längenmeßsystemen gelieferten Meßwerte weiter.

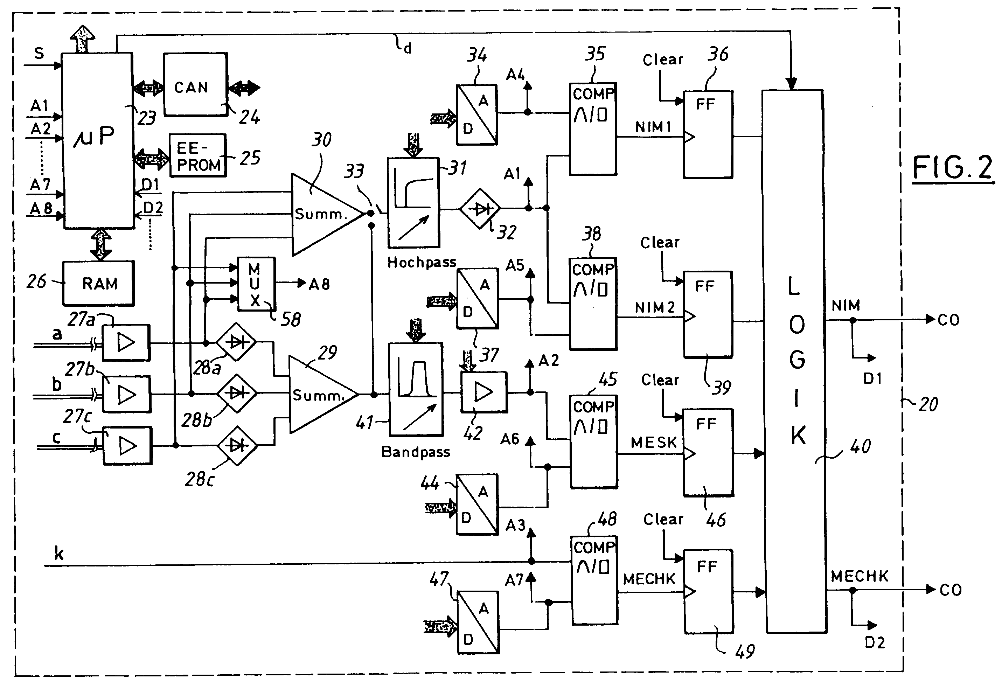

Wie aus der detaillierten Darstellung der Tastkopfelektronik (20) in Figur 2 hervorgeht sind die Signalleitungspaare a, b und c drei Eingangsverstärkern (27a, b und c) auf der Leiterkarte der Tastkopfelektronik (20) zugeführt. Deren Ausgänge sind jeweils an einen Gleichrichter (28a, 28b und 28c) und gleichzeitig an einen Multiplexer (58) sowie einen Summierer (30) angeschlossen. Der Summierer (30) faßt die drei von den piezoelektrischen Sensoren (18a - c) erzeugten Signale zusammen, so daß ein Summensignal entsteht, dessen Amplitude relativ unabhängig von der Antastrichtung ist. Dieses Summensignal ist über einen Schalter (33) einem Hochpaß (31) zugeführt. Dieser Hochpaß ist ein geschaltetes Kapazitätsfilter mit Mikroprozessoranschluß, dessen Kennlinie d.h. in erster Linie dessen untere Grenzfrequenz wie durch den schraffiert gezeichneten Pfeil angedeutet digital von dem ebenfalls auf der Leiterkarte befindlichen Mikroprozessor (23) verstellt werden kann. Dieser Hochpaß läßt sich digital auf die Frequenz des beim Antastvorgang bei der ersten Berührung erzeugten Schallsignals abstimmen. Ein solches Filter wird beipspielsweise von der Fa. MAXIM, Inc.in Sunnyvale, 120 St. Gabriel Drive, Kalifornien, USA, unter der Bezeichnung MAX 261 angeboten.

Auf den Hochpaß (31) folgt ein Gleichrichter (32), der dieses Wechselspannungssignal (Schallsignal) gleichrichtet. Das gleichgerichtete Signal ist zwei Komparatoren (35) und (38) zugeführt, deren Triggerschwelle von je einem Digital/Analogwandler (34) bzw. (37) gesteuert wird. Wie durch die entsprechenden Pfeile an den DIA-Wandlern (34) und (37) angedeutet wird die Triggerschwelle der Komparatoren (35) und (38) ebenfalls über den Mikroprozessor (23) gesetzt.

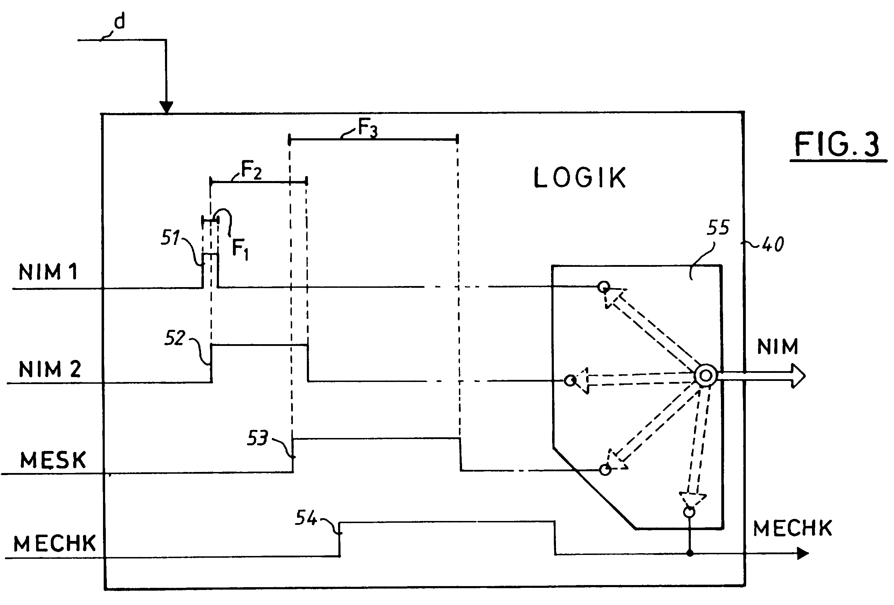

Um Antastvorgänge möglichst eindeutig erkennen zu können, ist die Triggerschwelle des Komparators (35) niedriger als die des Komparators (38). Entsprechend erzeugt die ansteigende Flanke des Tastsignals am Ausgang der Komparatoren (35) und (38) zwei zeitlich aufeinander folgende Rechtecksignale auf den Signalleitungen NIM1 und NIM2. Beide Signale sind über je einen Flip-Flop Baustein (36) bzw. (39) einer mit "Logik" bezeichneten Schaltung (40) zugeführt, deren Funktion noch anhand von Figur 3 beschrieben werden wird.

Da die Triggerschwellen der Komperatoren (35) und (38) unabhängig voneinander gesetzt werden können, läßt sich sowohl die Empfindlichkeit der Tastsignalerkennung als auch der zeitliche Abstand zwischen den beiden Rechtecksignalen auf den Signalleitungen NIM1 und NIM2 über den Mikroprozessor (23) einstellen.

Die Ausgänge der drei Gleichrichter (28a, 28b und 28c) sind weiterhin einem Summierer (29) zugeführt, auf den ein Bandpaßfilter (41) folgt. Dieses Bandpaßfilter ist genauso aufgebaut wie der Hochpaß (31) und bezüglich seiner Filtercharakteristik, d. h. die Lage der beiden Eckfrequenzen, ebenfalls digital vom Mikroprozessor (23) einstellbar. Auf den Bandpaß (41) folgt ein Verstärkerbaustein (42) mit einstellbarer Verstärkung, der Veränderungen der Signalintensität im Zuge einer Verstellung des Bandpaßes bzw. dessen Güte bei Wahl anderer Eckfrequenzen kompensiert.

Da der Bandpaß (41) auf relativ niedrige Frequenzen eingestellt ist, liegt am Ausgang des Verstärkers (42) ein Signal an, das relativ langsame Änderungen der auf die piezoelektrischen Sensoren (18a - c), und damit auf die Tastkugel (16) einwirkende Kräfte charakterisiert. Liegt dieses Signal über einer im Komparator (45) mit dem Ausgangssignal eines weiteren Digital/Analogwandlers (44) verglichenen Schwelle, dann gibt der Komparator (45) ein mit MESK bezeichnetes sogenanntes "Meßkraftsignal" ab, das anzeigt, daß die auf den Tastkugel wirkende Kraft einen Wert erreicht hat, wie er typisch bei Anlage der Tastkugel (16) an einem Werkstück auftritt. Dieses Signal MESK ist ebenfalls über einen Flip-Flop Baustein (46) dem Logikschaltkreis (40) zugeführt.

Das von dem elektromechanischen Schaltkontakt (13a/14a) abgeleitete Schaltsignal k wird auf der Leiterkarte der Tastkopfelektronik (20) direkt einem Komperator (48) zugeführt, dessen Schwelle auch wieder über einen Digital-Analogwandler (47) verstellbar ist. Über die Verstellung der Triggerschwelle lassen sich Widerstandsänderungen der Kontaktstelle durch Alterung oder Abbrand automatisch korrigieren, die andernfalls im Extremfall einen dauernd geöffneten Kontakt vortäuschen würden. Hierzu ist die Signalleitung k über den Meßpunkt A3 mit einem Analogeingang des Mikroprozessors verbunden, der die restwiderstandsabhängige Offsetspannung auf der Signalleitung k zyklisch abfragt und über den Digital-Analogwandler (47) die Triggerschwelle des Komparators (48) entsprechend nachführt. Zum Zwecke der Rückmeldung ist auch der Triggereingang des Komparators (48) über den Meßpunkt A7 mit einem Analogeingang des Mikroprozessors (23) verbunden.

Der Ausgang des Komparators (48) liefert das mit MECHK bezeichnete Signal, das den Zeitpunkt des Abhebens des Taststifts (15) bzw. seines Trägers (12a/12b) aus dem 3-Punkt-Lager (13/14) charakterisiert. Es wird ebenfalls über einen Flip-Flop Baustein (49) dem Logikschaltkreis (40) zugeführt.

Die Information über die einzustellenden Parameter, d. h. die Werte für die Grenzfrequenzen des Hochpasses (31) und des Bandpasses (41) sowie die Triggerschwellen der Komperatoren (35, 38, 45 und 48) erhält der Mikroprozessor (23) über den CAN-Bus (24) von der Steuerung (21) des Koordinatenmeßgerätes bzw. indirekt über den IEEE-Bus vom Rechner (22). Die einzustellenden Parameter speichert der Mikroprozessor in dem mit (25) bezeichneten EEprom, so daß die Werte auch bei Stromausfall bzw. einem Abschalten des Geräts erhalten bleiben.

In der Logikschaltung (40), die beispielsweise nach Art eines programable logic array oder aus diskreten NAND-Gattern aufgebaut sein kann oder dessen Funktion in der Firmware des Mikroprozessors (23) abgebildet sein kann, werden die Zeitfenster F1, F2 und F3 gesetzt, innerhalb deren jeweils auf das bei der ersten geringsten Berührung generierte Signal NIM1 hin die nachfolgenden Signale NIM2, MESK und MECHK auftreten müssen, wenn eine Antastung als gültig erkannt werden soll. Hierzu wird in der Logikschaltung (40) die Pulsdauer des Signals NIM1 auf einen relativ kurzen Wert von typisch 100µsec gesetzt, das Fenster F2, d. h. die Pulsdauer des Signals NIM2 auf einen mittleren Wert von etwa 15msec und das Zeitfenster F3, d. h. die Pulsdauer des Signales MESK auf einen längeren Wert von typisch 200msec. Über den Betriebsartenschalter (55) lassen sich dann ebenfalls vom Mikroprozessor (23) gesteuert verschiedene Betriebsarten einstellen:

### 1. Betriebsart:

Eine Antastung wird nur dann gültig gegeben, wenn alle vier Signale NIM1, NIM2, MESK und MECHK vorgelegen haben und zwar in der Form, daß der Rechteckimpuls (52) auf der Signalleitung NIM2 noch während des Rechteckimpulses (51) des Signals NIM1, der Rechteckimpuls (53) der Signalleitung MESK noch während des Impulses (52) der Signalleitung NIM2 und der Rechteckimpuls (54) auf der Signalleitung MECHK noch während des Rechteckimpulses (53) auf der Signalleitung MESK, d. h. innerhalb der vom Mikroprozessor eingestellten Fensterzeilen F1, F2 und F3 aufgetreten sind. In dieser Betriebsart wird der Antastzeitpunkt mit höchster Genauigkeit und Zuverlässigkeit generiert, da die Mehrfachauswertung Störungen wirkungsvoll unterdrückt und das Abstellen auf den bereits bei sehr kleinen Schalleistungen erzeugten Impuls (51) auf der Leitung NIM1 den Zeitpunkt allererster Berührung zwischen Tastkugel (16) und Werkstück zuverlässig wiedergibt.

### 2. Betriebsart:

Für die Auswertung werden nur die drei Signale NIM2, MESK und MECHK herangezogen, auf das Signal NIM1 wird verzichtet. Die Antastung wird dann als gültig erkannt, wenn die beiden Signale (53) und (54) auf den Signalleitungen MESK und MECHK wie in Betriebsart 1 beschrieben innerhalb der Zeitfenster F2 und F3 auf den Impuls (52) auf der Signalleitung NIM2 folen. Durch den Verzicht auf den bei niedriger Triggerschwelle gewonnenen allerersten Tastimpuls (51) wird zwar der Antastzeitpunkt nicht so exakt getroffen, dafür arbeitet die Schaltung aber störunanfälliger, weil Störimpulse mit niedrigem Signalpegel von vornherein vom Antastsignal ferngehalten werden.

### 3. Betriebsart:

Nur die Impulse (53) und (54) auf den beiden Signalleitungen MESK und MECHK werden für das Antastsignal ausgewertet. Der Impuls (54) muß während des Fensters F3 auf den Impuls (53) folgen. Bei dieser Betriebsart generiert der Anlagedruck der Tastkugel (16) am Werkstück das Antastsignal, was eine sehr hohe Störsicherheit bietet. Der hierdurch ermittelte Antastzeitpunkt liegt jedoch noch später als bei Betriebsart 2, allerdings kann hier für bestimmte Antastgeschwindigkeiten auf den exakten Antastzeitpunkt extrapoliert werden. Diese Betriebsart einzustellen empfiehlt sich besonders dann, wenn Umwelteinflüsse z.B. ein hoher Geräuschpegel, intensive Störsignale auf der an die Piezoelemente angeschlossenen Signalleitungen a, b und c zur Folge haben, oder bei verschmutzten oder weichen Werkstücken, die kein ausreichend intensives piezoelektrisches Signal liefern, d.h. vorzugsweise in all den Fällen, in denen das Signal/Rauschverhältnis auf diesen Signalleitungen schlecht ist.

### 4. Betriebsart:

Es wird nur mit den Signalen (54) auf der Signalleitung MECHKA gemessen. Dieses Signal (54) wird über den Betriebsartenschalter (55) auf die mit NIM bzeichnete Signalleitung geschaltet. Ein Antastsignal wird somit nur beim Ausheben des Taststiftträgers (12a/12b) aus einem Drei-Punkt-Lager (13/14) generiert. Diese Betriebsart liefert relativ ungenaue Meßergebnisse und wird in der Regel nur in folgenden Fällen benöigt: im Störfallbetrieb, d.h., wenn die Signalleitungen a, b und c, z.B. wegen eines Defekts überhaupt kein brauchbares Signal liefern, im Einrichtbetrieb, d.h. wenn beim Programmieren und Testen des CNC-Ablaufs die anzutastenden Punkte am Werkstück möglichst schnell abgearbeitet werden sollen, oder bei einem sogenannten Parameter-Orientierungslauf, in dem die optimal einzustellenden Parameter wie vorne beschrieben erst noch über einen oder mehrere Probeläufe am Werkstück bestimmt werden (Anspruch 18 und 19).

Im Logikbaustein (40) können zusätzlich zu den verschiedenen Betriebsarten auch die Zeitfenser F1, F2 und F3 vom Mikroprozessor (23) gesteuert digital eingestellt werden, wie das vereinfacht durch die Signalleitung d symbolisiert ist. Letztere Einstellung der Zeitfenster auf andere Werte ist insbesondere dann erforderlich, wenn beispielsweise mit einer anderen Antastgeschwindigkeit gearbeitet werden soll, entweder um die Meßzeit herabzusetzen oder um bei weichen Werkstücken aufgrund des dann kräftigeren "Stoßes" zwischen Tastkugel und Werkstück überhaupt ein Antastsignal zu erhalten. Hierbei verkürzen sich die Zeiten, in denen bei einer gültigen Antastung die Signalimpulse (51-54) aufeinander folgen. Die für die Antastgeschwindigkeit optimalen Zeitfenster können beispielsweise zusammen mit anderen Parametern wie den Triggerschwellen der Komperatoren (35, 38, 45, 48) und den Eckfrequenzen des Hochpaßes (31) und des Bandpasses (41) in einer Datei abgelegt sein, die mit der eingestellten Antastgeschwindigkeit verknüpft ist bzw. kann gemäß einer Weiterbildung der Erfindung die Antastgeschwindigkeit selbst als weiterer Parameter in die für eine bestimmte Meßaufgabe aufzurufende Datei aufgenommen sein. Da die optimale Antastgeschwindigkeit von der Materialpaarung zwischen Tastkugel (16) und dem zu vermessenden Werkstück abhängt, ist es auch möglich, die Dateien mit den Parametern für die Signalverarbeitung des Tastsignals zusammen mit dem Parameter Antastgeschwindigkeit in Dateien zu verwalten, die werkstück- bzw. werkstoffbezogen erstellt und gespeichert sind.

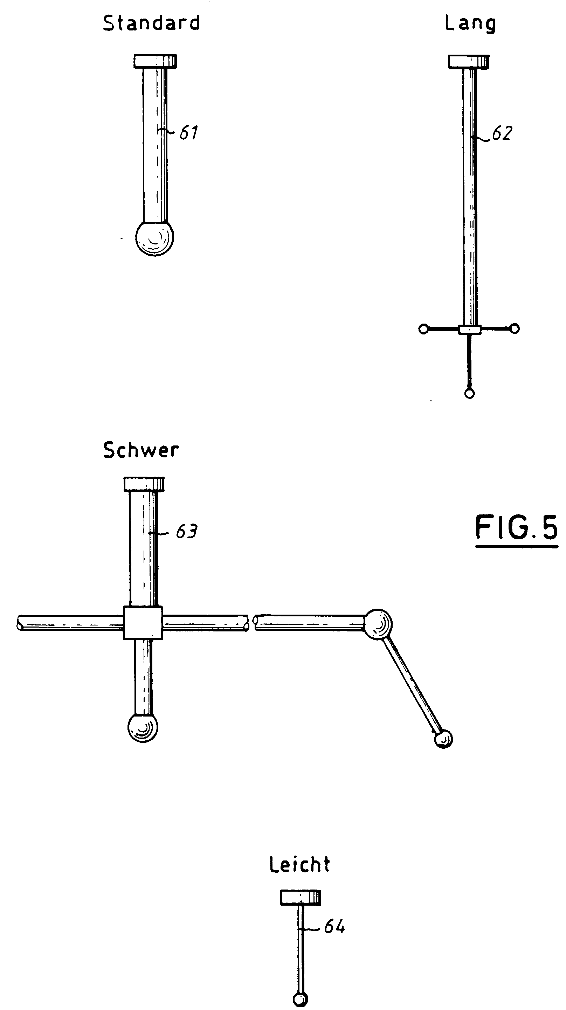

Ein auch in Bezug auf automatische Abläufe besonders vorteilhafte Art und Weise der Parameterumschaltung besteht darin, Dateien mit gespeicherten Werten für die verschiedenen Parameter den verschiedenen einzuwechselnden Taststiften bzw. Tasterkonfigurationen zuzuordnen. In Figur 5 sind beispielhaft fünf ganz unterschiedliche Tasterkonfigurationen dargestellt: Ein bei vielen Meßaufgaben einsetzbarer Standardtaststift (61) mit ca. 60 mm Länge und 8 mm Durchmesser, ein sehr langer Sterntaster (62), mit dem z.B. das innere von Getriebegehäusen vermessen wird, ein schwerer Spezialtaster (63), der aus einer Vielzahl verschiedener Einzeltaster besteht, mit denen in verschiedene Werkstückgeometrien eingetastet werden muß, und ein leichter, dünner Taststift (64) zur Vermessung von filigraneren Teilen.

Wegen der unterschiedlichen Schallaufzeiten aufgrund der Tasterlänge, unterschiedlichen Nachgiebigkeiten aufgrund des Tasterdurchmessers und unterschiedlichen mechanischen Eigenfrequenzen dieser Tasterkombinationen, weichen die mit den Tastern erzeugten Antastsignale hinsichtlich Intensität, Frequenzspektrum, Signalformen etc. voneinander ab.

Deshalb werden die optimalen Parameterkombinationen für die eingewechselten Taster in verschiedenen Dateien einmal erstellt und beispielsweise auf dem Rechner (22) abgelegt. Figur 6 zeigt eine beispielhafte Auflistung der verschiedenen auf dem Rechner (22) abgelegten Parameterdateien, die alle die Extension ST3 besitzen. Unter diesen Dateien befinden sich neben solchen, die den Tastern (61 - 64) zugeordnet sind, auch solche die für die Betriebsarten "genaues Messen" und "schnelles Messen" optimiert sind sowie zwei Dateien Sonder 1 und Sonder 2 für besondere Meßaufgaben wie beispielsweise das Vermessen von Plastilinmodellen.

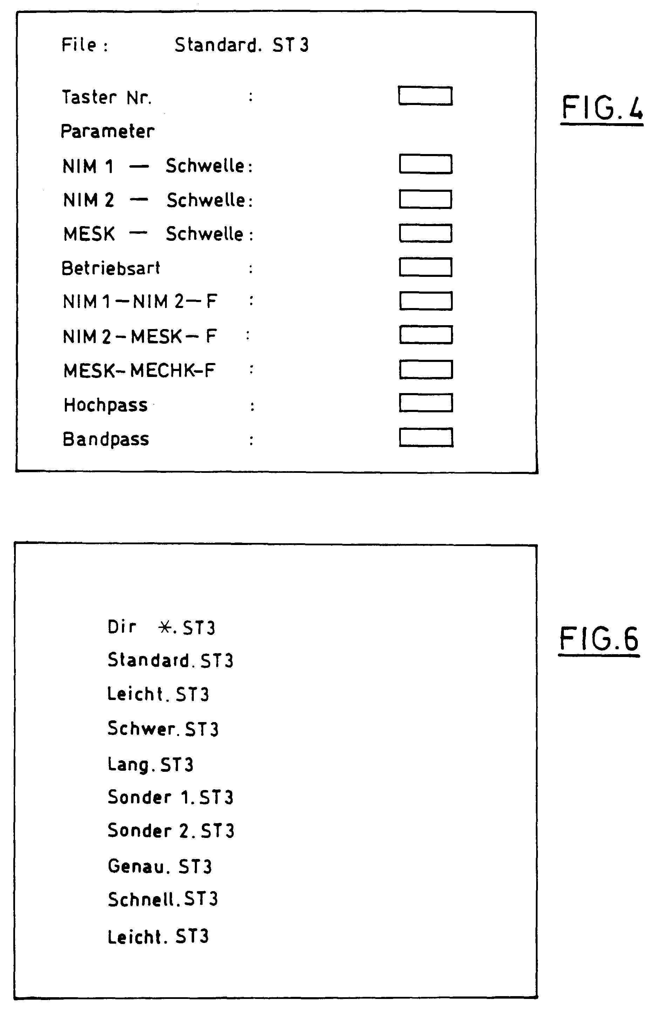

Die in den Dateien enthaltenen Parameter sind für alle Dateien gleich und beispielhaft in Figur 4 für die Datei Standard.ST3 aufgeführt. Hierbei ist es auch möglich, der Datei einen bestimmten Taster zuzuordnen, dessen Nummer in die Datei eingetragen werden kann.

Werksseitig oder vom Bediener können in der Datei Änderungen vorgenommen werden und die aufgeführten 9 oder eventuell noch weitere Parameter auf die der Meßaufgabe optimal angepaßten Werte gesetzt werden. Bei den drei erstgenannten Parametern handelt es sich um die über die Digitalwandler (34, 37 und 44) einstellbaren Triggerschwellen der Komperatoren (35, 38 und 45), bei der "Betriebsart" um eine der vier Betriebsarten, die anhand von Figur 3 erläutert worden sind, bei den drei nächsten Parametern um die in Figur 3 mit F1 bis F3 bezeichneten Fenster- bzw. Pulslängen der Signale (51) (52) und (53) auf den Leitungen NIM1, NIM2 und MESK, weiterhin um die untere Grenzfrequenz des Hochpasses (31) und die Mittenfrequenz des Bandpasses (44).

Die in den Kästchen hinter den Parametern einzugebenden Werte können Erfahrungswerte sein, die dort manuell bei der Erstellung der Datei eingegeben werden. Darüber hinaus ist es jedoch auch möglich, die Parameter wie in der Beschreibungseinleitung ausgeführt über ein Software- oder Firmwaremodul automatisch bestimmen und einstellen zu lassen.

Durch die Verknüpfung mit einer oder mehreren Tasteradressen werden die in Figur 6 aufgelisteten Dateien bei einem Tasterwechsel automatisch aufgerufen und die darin gesetzten Parameter über den CAN-Bus an den Mikroprozessor (23) übergeben, der die entsprechenden Werte für die Bauteile auf der Tastkopfelektronik (20) in Figur 2 einstellt.

Gleichfalls ist es möglich, die Einstellung der verschiedenen Parameter noch stärker mit dem einzuwechselnden Taster bzw. Tastkopf zu verkoppeln, in dem die Dateien mit den Parametern nicht im Rechner (22) sondern in der Firmware des Mikroprozessors (23) abgelegt werden und die Auswahl der Dateien direkt anhand des vom Code-Leser (62) über die Signalleitung s an den Mikroprozessor (23) übermittelten Code erfolgt.

Wie aus Figur 2 hervorgeht sind an verschiedenen Stellen auf der Leiterkarte der Tastkopfelektronik Abgriffpunkte A1-A8 vorgesehen, an denen die verschiedenen Formen des Tastsignals abgenommen und den entsprechenden Analogeingängen des Mikroprozessors (23) zugeführt sind. Dieser speichert die zeitlichen Verläufe der Signale an diesen Abgriffpunkten in dem flüchtigen Speicherbaustein (26) (RAM) ab. Dort entsteht also für jeden Antastvorgang ein zweidimensionales Datenfeld, in dem die verschiedenen abgegriffenen Signale in zeitlicher Relation zueinander bis zum nächsten Antastvorgang gehalten werden. Gleiches geschieht mit den Signalen auf der Signalleitung NIM und MECHK, die an den mit D1 und D2 bezeichneten Stellen abgegriffen und an die entsprechenden Digitaleingänge des Mikroprozessors (23) gelegt sind.

Der Inhalt des RAM (26) kann über den CAN-Bus (24) an den Rechner (22) übergeben werden, der diese Signalverläufe beispielsweise zur Dokumentation des gesamten Meßablaufs für die verschiedenen Antastpunkte auf einer Diskette speichert. Gleichfalls ist es auf diese Weise möglich, die gespeicherten Signalverläufe für eine spätere Optimierung zu analysieren. Dazu können die Signalverläufe auch vom Rechner (22) über eine Datenschnittstelle und ein zugeschaltetem Modem fernübertragen werden, damit die Analyse der Signalverläufe durch Spezialisten beim Hersteller erfolgen kann, wenn beim Kunden und Anwender des Koordinatenmeßgeräts Meßprobleme auftreten.

Über das Modem lassen sich dann auch speziell für den Kunden erstellte Parameterdateien zum Rechner (22) des Koordinatenmeßgeräts übertragen. An dieser Stelle ist noch anzumerken, daß die Datenschnittstelle nicht zwangsläufig über den Rechner (22) geführt werden muß, sondern daß beispielsweise auch eine Datenschnittstelle direkt an den CAN-Bus (24) angeschlossen werden kann, mit der das erwähnte Modem dann kommuniziert.

In der Figur 2 ist eine Tastkopfelektronik für einen sogenannten schaltenden Tastkopf dargestellt und vorstehend beschrieben. Die Erfindung läßt sich jedoch auch in Verbindung mit messenden Tastköpfen nutzen, in denen der Auslenkung des Taststifts proportionale Analogsignale erzeugt werden. Denn diese Signale können ebenso in einer zugehörigen Tastkopfelektronik der Meßaufgabe entsprechend unterschiedlich verstärkt, gefiltert und logischen Verknüpfungen unterworfen werden wie das Antastsignal des in Figur 1 dargestellten schaltenden Tasters. Gleichfalls ist es möglich, auch das Signal eines sogenannten Quarzschwingtasters der Meßaufgabe entsprechend nach verschiedenen Kriterien bzw. mit verschiedenen in der Signalverarbeitungselektronik gesetzten Parameterwerten zu behandeln. Ein solcher Quarzschwingtaster ist beispielsweise in dem deutschen Gebrauchsmuster 92 13 060 beschrieben.

## Patentansprüche

1. Koordinatenmeßgerät mit einem oder mehreren Tastköpfen (10), denen auswechselbare Taster (15, 61 - 64) und eine Elektronik (20) zur Verarbeitung der beim Tastvorgang erzeugten Signale (a, b, c, k) zugeordnet sind, wobei die Elektronik (20) das Einstellen von Parametern erlaubt, welche die Art und Weise der Signalverarbeitung bestimmen, die Parameter digital einstellbar sind und mindestens ein Satz von Werten verschiedener Parameter zusammen in einer Datei (*.ST3) gespeichert ist, die entsprechend der ausgewählten Meßaufgabe aufrufbar ist.

2. Koordinatenmeßgerät nach Anspruch 1, wobei mehrere unterschiedliche Parametersätze als Dateien (*.ST3) gespeichert sind.

3. Koordinatenmeßgerät nach Anspruch 2, wobei die Dateien (*.ST3) ausgewählten Taststiften (61 - 64) bzw. ausgewählten Tasterkonfigurationen oder verschiedenen Tastkopftypen zugeordnet sind und die in der betreffenden Datei (*.ST3) gespeicherten Werte der Parameter beim Antasten mit dem betreffenden Taststift (61 - 64) bzw. beim Einwechseln der gewählten Tasterkonfiguration oder des betreffenden Tastkopfs (10) einstellbar sind.

4. Koordinatenmeßgerät nach einem der Ansprüche 1-3, wobei die Dateien (*.ST3) ausgewählten Gerätetypen des Koordinatenmeßgeräts oder bestimmten Meßaufgaben zugeordnet sind und bei einem Wechsel des Gerätetyps bzw. der Meßaufgabe aktiviert werden, wodurch die darin gespeicherten Werte der Parameter eingestellt werden.

5. Koordinatenmeßgerät nach einem der Ansprüche 1-4, wobei unterschiedliche Meßaufgaben nach mindestens einem der folgenden Kriterien ausgewählt sind:
- der Meßgeschwindigkeit
- der zu erzielenden Meßgenauigkeit bzw. Meßunsicherheit
- dem Typ oder dem Werkstoff des zu vermessenden Meßobjekts.

6. Koordinatenmeßgerät nach einem der Ansprüche 1-5, wobei ein Software- oder Firmwaremodul vorgesehen ist, das den Verlauf des Tastsignals an unterschiedlichen Stellen in der Taststiftelektronik analysiert und die Parameter entsprechend der Analyse einstellt bzw. die betreffende Parameterdatei aufruft oder vorschlägt.

7. Koordinatenmeßgerät nach einem der Ansprüche 1-5, wobei ein Software- oder Firmwarmodul vorgesehen ist, das verschiedene Parameterkombinationen während eines Probelaufes einstellt, bei dem ein Werkstück mehrfach angetastet wird, und das die Parameter entsprechend den dabeigewonnenen Meßergebnissen einstellt bzw. die betreffende Parameterdatei aufruft oder vorschlägt.

8. Koordinatenmeßgerät nach einem der Ansprüche 1-7, wobei mindestens zwei der folgenden Paramter einstellbar sind:
- Die Empfindlichkeit eines oder mehrerer Verstärker (37) für das Tastsignal;
- die Charakteristik eines oder mehrerer Frequenzfilter (31, 41) für das Tastsignal;
- die Schwelle einer oder mehrerer Triggerschaltungen (35, 38, 45, 48) für das Tastsignal;
- die zulässige Dauer (F1, F2, F3) des Tastsignals;
- die zulässige zeitliche Reihenfolge oder zulässigen Zeitabstände zwischen mehreren zusammenhängenden Tastsignalimpulsen (51 - 54);
- die Auswahl, welche von mehreren Tastsignalen (51 - 54) weiter verarbeitet wird (Betriebsart).

9. Koordinatenmeßgerät nach Anspruch 8, wobei das Frequenzfilter (31) ein Bandpaßfilter und / oder ein Hochpaßfilter (41) in Form eines geschalteten Kapazitätsfilters mit Mikroprozessoranschluß ist.

10. Koordinatenmeßgerät nach einem der Ansprüche 3-4, wobei dem einzuwechselnden Tastkopf (10), Taststift oder der einzuwechselnden Tasterkonfiguration ein identifizierbarer Code (61) zugeordnet ist und die Auswahl der betreffenden Parameterdatei durch den Code gesteuert erfolgt.

11. Koordinatenmeßgerät nach einem der Ansprüche 1-10, wobei die Elektronik (20) über einen seriellen Bus (CAN) oder eine serielle Schnittstelle an die Steuerung (21) und die Steuerung (21) an den Rechner (22) des Koordinatenmeßgeräts angeschlossen ist.

12. Koordinatenmeßgerät nach einem der Ansprüche 1-11, wobei die Elektronik einen Mikroprozessor enthält mit mehreren Analogeingängen (A1 - A8), die mit verschiedenen Punkten (A1 - A8) der Tastsignalverarbeitung verbunden ist, und daß der zeitliche Verlauf der während eines Antastvorganges an den Punkten (A1 - A8) auftretenden Signale im Speicher (26) (RAM) des Mikroprozessors (23) ablegbar ist.

13. Koordinatenmeßgerät nach Anspruch 12, wobei die Elektronik (20) mit einem Modem verbindbar ist, über welches die gespeicherten Signalverläufe (A1 - A8) fernübertragbar sind.

14. Koordinatenmeßgerät nach einem der Ansprüche 11 und 12 und 15, wobei die im Speicher (26) (RAM) des Mikroprozessors abgelegten Signalverläufe über den seriellen Bus (CAN) übertragbar sind.

15. Koordinatenmeßgerät nach einem der Ansprüche 1-14, wobei die von der Elektronik (20) eingestellten Werte der Parameter in einem nicht flüchtigen Speicher (25) abgelegt sind.

16. Koordinatenmeßgerät nach einem der Ansprüche 1-15, wobei der Tastkopf mindestens zwei verschiedene Antastsignale (a, b, c, k) liefert und die Elektronik mindestens eines der beiden Signale (a, b, c) in mehreren Signalzweigen (NIM1, NIM2, MESK) parallel verarbeitet.

17. Verfahren zur Koordinatenmessung an Werkstücken mit einem Tastkopf, dem auswechselbare Taster (61 - 64) und eine Elektronik (20) zur Verarbeitung der beim Tastvorgang erzeugten Signale (a - c, k) zugeordnet sind, wobei die Elektronik das Einstellen von mindestens zwei unterschiedlichen Parametern erlaubt, welche die Art und Weise der Signalverarbeitung bestimmen, und wobei
- für die jeweiligen Messaufgaben bzw. die verwendeten Taster besonders geeignete Einstellungen der Parameter bestimmt und die so bestimmten Parametersätze in unterschiedlichen Dateien abgespeichert werden;
- die entsprechenden Dateien beim Wechsel der Meßaufgabe aufgerufen werden und die gespeicherten Parametersätze geladen und in der Elektronik neu eingestellt werden;
- die Signalverarbeitung anschließend mit den neu geladenen Parametersätzen erfolgt.

18. Verfahren nach Anspruch 17, wobei das Laden der Parametersätze und Einstellen in der Elektronik automatisch nach einer programmgesteuerten Analyse des bei einem Antastvorgang gewonnenen Tastsignals erfolgt.

19. Verfahren nach Anspruch 17, wobei zur Auswahl der optimalen Parameter in einem Probelauf mehrere Antastvorgänge mit unterschiedlichen Parametern bzw. Parameterkombinationen vorgenommen werden.

20. Verfahren nach Anspruch 17, wobei das Laden und Einstellen der Parametersätze in der Elektronik automatisch durch den Wechsel des Tastkopfes oder des Taststiftes bzw. der Tasterkombination gesteuert erfolgt.

21. Koordinatenmeßgerät nach einem der Ansprüche 1-10, wobei die Elektronik über einen seriellen Bus oder eine serielle Schnittstelle direkt an den Rechner (22) des Koordinatenmeßgeräts angeschlossen ist.

## Claims

1. A coordinate measurement machine having one or more probe heads (10) with associated replaceable probes (15, 61 to 64) and an electronic system (20) for processing probe signals (a, b, c, k) produced in the course of a probing procedure, wherein the electronic system (20) permits parameters to be set to determine the manner and nature of. signal processing, the parameters being set digitally, and at least one set of values of different parameters being stored in a data file (*. ST3) which can be called up in accordance with a selected measurement task.

2. A coordinate measurement machine according to claim 1, in which several different sets of parameters are stored as data files (*.ST3).

3. A coordinate measurement machine according to claim 2, in which the data files (*.ST3) are associated with selected probe pins (61 to 64) or selected probe configurations or different types of probe heads, and the values of the parameters stored in the corresponding data file (*.ST3) can be set upon workpiece contact with the corresponding probe pin (61 to 64) or upon introduction of a selected probe configuration or of a selected probe head (10).

4. A coordinate measurement machine according to one of the claims 1 to 3, in which the date files (*.ST3) are associated with selected types of machine operation of the coordinate measurement machine or are associated with different measurement tasks and are activated upon a change in the type of machine operation or upon a change of measurement task, the values of the stored parameters being set for operation of the coordinate measurement machine upon making one or the other of said changes.

5. A coordinate measurement machine according to one of the claims 1 to 4, in which different measurement tasks are selected in accordance with at least one of the following criteria:
- the speed of measurement,
- the relative accuracy of measurement to be obtained, and
- the type or material of the object to be measured.

6. A coordinate measurement machine according to one of the claims 1 to 5, in which a software module or a firmware module is provided which analyses the course of a probe signal at different points in the probe-pin electronic system and sets the parameters in accordance with the analysis or calls up or proposes the corresponding parameter data file.

7. A coordinate measurement machine according to one of the claims 1 to 5, in which a software module or a firmware module is provided which sets different parameter combinations during a trial run in which a workpiece is contacted several times and which sets the parameters in accordance with the measurement results thereby obtained or calls up or proposes a corresponding parameter data files.

8. A coordinate measurement machine according to claims 1 to 7, in which at least two of the following parameters can be set:
- the sensitivity of one or more amplifiers (37) for the probe signals;
- the characteristics of one or more frequency filters (31, 41) for the probe signals;
- the threshold level of one or more trigger circuits (35, 38, 45, 48) for the probe signals;
- the permissible duration (F1, F2, F3) of the probe signal;
- the permissible time sequence or permissible time spacings between several connected probe-signal pulses (51 to 54);
- the selection as to which of several probe signals (51 to 54) is to be further processed (mode of operation).

9. A coordinate measurement machine according to claim 8, in which said frequency filter (31) is a band-pass filter and/or a high-pass filter (41) in the form of a switched-capacitance filter having a microprocessor connection.

10. A coordinate measurement machine according to claims 3 to 4, in which an identification code (61) is associated with the probe head (10), probe pin or probe configuration to be introduced, and in which the selection of the corresponding parameter data file is effected under the control of the code.

11. A coordinate measurement machine according to one of the claims 1 to 10, in which the electronic system (20) is connected via a serial bus (CAN) or a serial interface to control means (21), the control means (21) being connected to the computer (22) of the coordinate measurement machine.

12. A coordinate measurement machine according to claims 1 to 11, in which the electronic system contains a microprocessor having several analog inputs (A1 to A8) which are respectively connected with different points (A1 to A8) within the electronic system for probe-signal processing, and that the time-course of the signals occurring during a workpiece-contacting procedure at the analog-input points (A1 to A8) can be stored in a memory component (RAM 26) of the microprocessor (23).

13. A coordinate measurement machine according to claim 12, in which the electronic system (20) is connectable to a modem over which stored signal courses (A1 to A8) can be remotely transmitted.

14. A coordinate measurement machine according to one of the claims 11, 12 and 15, in which signal courses stored in the memory component (26) (RAM) of the microprocessor can be transmitted over a serial bus (CAN).

15. A coordinate measurement machine according to claims 1 to 14, in which the values of the parameters set by the electronic system (20) are stored in a nonvolatile memory (25).

16. A coordinate measurement machine according to claims 1 to 15, in which the probe head supplies at least two different contact signals (a, b, c, k), and the electronic system concurrently processes at least one of the two signals (a, b, c) in parallel in separate signal branches (N1M1, N1M2, MESK).

17. A method for coordinate measurement on workpieces using a probe head with associated interchangeable probes (61 to 64) and with an electronic system (20) for processing signals (a - c, k) produced upon probe contact with a workpiece, wherein the electronic system permits the setting of at least two different parameters which determine the nature and manner of signal processing, and further wherein
- for specific measurement tasks and/or for each selectable probe, particularly suitable sets of parameter values are determined and the thus-determined sets of parameter values are stored in different data files;
- the corresponding data files are called up upon a change in measurement task, and the applicable stored set of parameter values is loaded into the electronic system to reset parameter values therein; and
- signal-processing then proceeds for the changed measurement task using the newly loaded set of parameter values.

18. A method according to claim 17, in which the loading of sets of parameter values and the setting of said values in the electronic system takes place automatically in accordance with a program-controlled analysis of the probe signal obtained in the course of a workpiece-contacting procedure.

19. A method according to claim 17, in which for the selection of optimal parameters, several contacting procedures with different parameters or combinations of parameters are performed in a test run.

20. A method according to claim 17, in which the loading and setting of sets of parameter values in the electronic system takes place automatically, controlled by a change of probe head or a change of probe pin and/or a change of a probe combination.

21. A coordinate measurement machine according to claims 1 to 10, in which the electronic system (20) is connected via a serial bus or a serial interface directly to the computer (22) of the coordinate measurement machine.

## Revendications

1. Appareil de mesure à coordonnées muni d'une ou plusieurs têtes de palpage (10), auxquelles des palpeurs interchangeables (15, 61- 64) et un système électronique (20) sont affectés pour traiter les signaux (a, b, c, k) générés lors du palpage, tel que le système électronique (20) permet de régler des paramètres qui déterminent le type et le mode de traitement des signaux, que lesdits paramètres sont réglables numériquement et qu'un bloc de valeurs de divers paramètres est mémorisé conjointement dans un fichier (*.ST3) qui est adressable selon l'opération de mesure envisagée.

2. Appareil de mesure à coordonnées selon la revendication 1, tel que plusieurs blocs de paramètres différents sont emmagasinés sous forme de fichiers (*.ST3).

3. Appareil de mesure à coordonnées selon la revendication 2, tel que les fichiers (*.ST3) sont affectés à des palpeurs sélectionnés (61 - 64) ou à certaines configurations de palpeurs ou bien encore à divers types de tête de palpage, et que les valeurs des paramètres, mémorisées dans le fichier correspondant (*.ST3) sont réglables lors du contrôle avec le palpeur sollicité (61 - 64) ou lors du changement de la configuration de palpeur choisie ou de la tête de palpage impliquée (10).

4. Appareil de mesure à coordonnées selon l'une des revendications numérotées de 1 à 3, tel que les fichiers (*.ST3) sont affectés à des types sélectionnés d'appareil de mesure à coordonnées ou à certaines tâches de mesure et qu'ils sont activés lors du changement de type d'appareil ou de l'opération de mesure à exécuter, ce qui règle les valeurs des paramètres qui y sont mémorisées.

5. Appareil de mesure à coordonnées selon l'une des revendications numérotées de 1 à 4, tel que diverses tâches de mesure sont sélectionnées d'après l'un des critères suivants au moins :
- vitesse de mesure
- précision de mesure à atteindre ou incertitude de mesure
- type ou matériau constitutif de l'objet à contrôler.

6. Appareil de mesure à coordonnées selon l'une des revendications numérotées de 1 à 5, tel qu'un module de logiciel ou de microprogrammes est prévu pour analyser la progression du signal de palpage en divers points dans le système électronique du palpeur, pour régler alors les paramètres en fonction de cette analyse, ainsi que pour appeler ou proposer le fichier de paramètres impliqué.

7. Appareil de mesure à coordonnées selon l'une des revendications numérotées de 1 à 5, tel qu'un module de logiciel ou de microprogrammes est prévu pour régler diverses combinaisons de paramètres lors d'un cycle d'essai où une pièce est palpée plusieurs fois, pour régler les paramètres selon les résultats de mesure alors recueillis, ainsi que pour appeler ou proposer le fichier de paramètres impliqué.

8. Appareil de mesure à coordonnées selon l'une des revendications numérotées de 1 à 7, tel que deux des paramètres suivants au moins sont réglables :
- la sensibilité d'un ou de plusieurs amplificateurs (37) du signal de palpage;
- la caractéristique d'un ou de plusieurs filtres de fréquence (31, 41) du signal de palpage;
- le seuil d'un ou de plusieurs circuits de déclenchement (35, 38, 45, 48) du signal de palpage;
- la durée admissible (F1, F2, F3) du signal de palpage;
- la succession dans le temps admissible ou les intervalles de temps admissibles entre plusieurs impulsions de signal de palpage corrélés les uns aux autres;
- le choix parmi plusieurs signaux de palpage (51 - 54) de ceux encore à traiter (mode de fonctionnement).

9. Appareil de mesure à coordonnées selon la revendication 8, tel que le filtre de fréquence (31) représente un filtre passe-bande et / ou un filtre passe-haut (41) sous la forme d'un filtre capacitif commuté, muni d'un raccordement au microprocesseur.

10. Appareil de mesure à coordonnées selon l'une des revendications numérotées de 3 à 4, tel qu'un code identifiable (61) est attribué à la tête de palpage (10), au palpeur ou à la configuration de palpeur à remplacer et qu'il commande alors le choix du fichier de paramètres impliqué.

11. Appareil de mesure à coordonnées selon l'une des revendications numérotées de 1 à 10, tel que le système électronique (20) est relié à l'unité de commande (21) et l'unité de commande (21) au calculateur (22) par l'intermédiaire d'un bus sériel (CAN) ou d'une interface sérielle.

12. Appareil de mesure à coordonnées selon l'une des revendications numérotées de 1 à 11, tel que le système électronique comporte un microprocesseur doté de plusieurs entrées analogiques (A1 - A8) qui sont associées au traitement du signal de palpage en divers points (A1 - A8) et que la progression dans le temps des signaux qui apparaissent aux points (A1 - A8) lors d'une opération de palpage est enregistrable dans la mémoire vive (RAM) (26) du microprocesseur (23).

13. Appareil de mesure à coordonnées selon la revendication 12, tel que le système électronique (20) est reliable à un modem qui permet de télétransmettre la progression des signaux mémorisée (A1 - A8).

14. Appareil de mesure à coordonnées selon l'une des revendications numérotées 11, 12 et 15, tel que la progression des signaux emmagasinés dans la mémoire vive (RAM) (26) du microprocesseur est transférable à l'aide du bus sériel (CAN).

15. Appareil de mesure à coordonnées selon l'une des revendications numérotées de 1 à 14, tel que les valeurs des paramètres réglées par le système électronique (20) sont enregistrées dans une mémoire non volatile (25).

16. Appareil de mesure à coordonnées selon l'une des revendications numérotées de 1 à 15, tel que la tête de palpage fournit deux signaux de palpage différents (a, b, c, k) et que le système électronique traite au moins l'un des deux signaux (a, b, c) dans plusieurs circuits parallèles (NIM1, NIM2, MESK).

17. Procédé pour mesurer des pièces dans plusieurs coordonnées à l'aide d'une tête de palpage, à laquelle sont affectés des palpeurs interchangeables (61 - 64) et un système électronique (20) pour traiter les signaux (a - c, k) générés lors du palpage, tel que le système électronique permet de régler au moins deux paramètres différents qui déterminent le type et le mode de traitement des signaux, et tel que
- des réglages de paramètres particulièrement appropriés aux opérations de mesure respectivement impliquées et aux palpeurs utilisés sont déterminés et que les blocs de paramètres ainsi déterminés sont mémorisés dans divers fichiers;
- les fichiers correspondants sont appelés lors du changement de la tâche de mesure à exécuter, que les blocs de paramètres mémorisés sont chargés et réglés de nouveau dans le système électronique;
- le traitement des signaux intervient dans le droit fil des blocs de paramètres fraîchement chargés.

18. Procédé de mesure selon la revendication 17, tel que le chargement des blocs de paramètres et le réglage dans le système électronique se déroulent automatiquement suite à une analyse programmée du signal de palpage produit lors d'une opération de mesure.

19. Procédé de mesure selon la revendication 17, tel que plusieurs opérations de palpage sont exécutées au moyen de divers paramètres ou combinaisons de paramètres en vue de sélectionner les paramètres optimaux dans un cycle d'essai.

20. Procédé de mesure selon la revendication 17, tel que le chargement des blocs de paramètres et le réglage dans le système électronique se déroulent automatiquement par simple changement de la tête de palpage ou du palpeur ou bien encore de la combinaison de palpeur.

21. Appareil de mesure à coordonnées selon l'une des revendications numérotées de 1 à 10, tel que le système électronique est relié au calculateur (22) de l'appareil de mesure à coordonnées par l'intermédiaire d'un bus sériel (CAN) ou d'une interface sérielle.
